(19) Europäisches Patentamt
European Patent Office
Office européen des brevets

(11) Publication number: 0 093 403 B1

# (12) EUROPEAN PATENT SPECIFICATION

(45) Date of publication of patent specification: 28.06.89

(51) Int. Cl.⁴: **H 04 B 15/00**

(21) Application number: 83104136.3

(22) Date of filing: 27.04.83

## (54) Radio frequency interference radiation suppressing ignition system.

(30) Priority: 30.04.82 JP 71541/82

(43) Date of publication of application: 09.11.83 Bulletin 83/45

(45) Publication of the grant of the patent: 28.06.89 Bulletin 89/26

(84) Designated Contracting States: DE FR GB

(56) References cited:
US-A-2 563 952
US-A-3 542 006
US-A-4 135 066

(73) Proprietor: NISSAN MOTOR CO., LTD.
No.2, Takara-cho, Kanagawa-ku
Yokohama-shi Kanagawa-ken 221 (JP)

(72) Inventor: Sone, Masazumi
25-21, Nakane 1-chome
Meguro-ku Tokyo (JP)

(74) Representative: Patentanwälte TER MEER - MÜLLER - STEINMEISTER
Mauerkircherstrasse 45
D-8000 München 80 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 093 403 B1

**Description**

This invention relates to radio frequency interference radiation suppressing ignition system for use with motor vehicle internal combustion engines.

Motor vehicle radio frequency interference radiation, which is caused by the breakdown of the arc gap between the distributor rotor output segment tip surface and each of the circumferentially disposed distributor output terminals and by the breakdown of the arc gap of each spark plug, creates disturbances in television units, radio units, and other broadcasting units. In order to avoid such disturbances, standards have been established in Japan and foreign countries to regulate or control motor vehicle radio frequency interference radiation. Such motor vehicle radio frequency interference radiation would also cause troubles in motor vehicle electronic controlled systems including an electronic controlled fuel injection system, electronic controlled antiskid system, electronic controlled automatic transmission system, etc. to endanger safe vehicle traffic.

Various measures have been taken to effect the suppression of radio frequency interference radiation from ignition systems. These measures include:

1. A distributor having a rotor output segment formed of insulating and dielectric materials to provide a rotor input tip surface including the conductive and dielectric materials separately disposed from each other;

2. Spark plugs each having a monolithic resistor connected between its input terminal and its center electrode; and

3. Resistive-cord cables connected between the distributor and the respective spark plugs and between the distributor and an ignition coil.

A combination of the abovementioned measures 1 and 2 is proposed in the document US—A—4 135 066. On the other hand, the document US—A—3 542 006 discloses a combination of the measures 2 and 3, the resistance of the resistive-cord cables being in the range of 4 kΩ per foot. Further, according to the document US—A—2 563 952, the first and second cables are formed by distributed resistance cables having an insulating sheath and an inner natural or synthetic rubber core rendered conductive by the inclusion of finally comminuted particles of graphit, carbon black or the like. According to the teaching of the latter document, the total distributed resistance between the ignition coil and each spark plug should be in the range of from 10 kΩ to 30 kΩ.

However, the conventional ignition systems have been found to be insufficient to fully meet the radio frequency interference radiation control standards particularly in the frequency range of about 20 MHz to 100 MHz. Accordingly, a need has been recognized for a new measure which can suppress radio frequency interference radiation to a sufficient extent particularly in the frequency range of about 20 MHz to 100 MHz compensate for the aforementioned drawbacks inherent in conventional ignition systems.

Therefore, the present invention provides a radio frequency interference radiation suppressing ignition system which can suppress radio frequency interference radiation to a sufficient extent over the entire frequency range.

The features of the ignition system according to the invention are specified in claim 1.

It has been found that the suppression of radio frequency interference radiation specifically in the range about 20 MHz to 100 MHz can be remarkably improved if all of the abovementioned measures 1 and 3 are combined with each other and if, specifically, the total resistance of the cable which connects the ignition coil to the distributor input terminal is in the range from 12 kΩ to 25 kΩ.

Useful measures for further improving the ignition system according to the invention are indicated in the dependent claims.

The details as well as other features and advantages of this invention are set forth below and are shown in the accompanying drawings, in which:

Fig. 1 is a sectional view showing an ignition system made in accordance with the teachings of the present invention;

Fig. 2 is a graph plotting relative radio frequency interference radiation intensity in decibels against distributor discharge voltage in kilovolts to indicate the correlation therebetween;

Fig. 3 is a comparative graph of a family of curves representing radio frequency interference radiation intensity versus frequency, each curve being for a different set of radio frequency interference radiation suppressing measures;

Figs. 4A and 4B are comparative graphs plotting radio frequency interference radiation intensity with respect to given points of frequency;

Fig. 5 is a comparative graph of a family of curves representing radio frequency interference radiation suppressing effect versus frequency, each curve being for a different resistive-cord cable length; and

Figs. 6A and 6B are comparative graphs plotting radio frequency interference radiation intensity with respect to given points of frequency.

Referring now to Fig. 1, the ignition distributor 10 comprises a distributor rotor 20 which is rotated by a driving shaft 12, usually gear coupled to the camshaft of the associated internal combustion engine, within a distributor cap 30 having a center input terminal 32 and a plurality of output terminals 38 circumferentially disposed about the axis of rotation of the rotor 20. The center input terminal 32 is connected through a lead 50 to the secondary winding of the associated ignition coil 40. The output terminals 38 are connected through respective spark plug leads 60 to the engine spark plugs, one of which is shown at 70.

The ignition distributor rotor 20 comprises a body member 22 of an electrical insulating material adapted to engage and be rotated about an axis of rotation by the driving shaft 12. The body member 22 supports a rotor output segment 24 on which a center electrode 34 is urged in contact therewith and electrically connected to the center terminal 32 by a spring 36. The rotor output segment 24 extends in a direction toward and terminates radially inwardly from the circumferentially disposed distributor output terminals 38. The rotor output segment 24 has an output tip surface 24a which successively faces the distributor output terminals 38 across a distributor gap while the rotor output segment 24 is rotated with the body member 22 to distribute power to the respective spark plugs.

Referring to Fig. 2, radio frequency interference radiation intensity in decibels is plotted on the ordinate axis of the graph and distributor discharge voltage in kilovolts is plotted on the abscissa with the distributor gap being set at 1.75 mm. As will be observed from this diagram, the radio frequency interference radiation intensity is highly correlative to the distributor discharge voltage and is varied substantially in a linear relationship to the distributor discharge voltage.

In order to suppress radio frequency interference radiation, various attempts have been made to reduce the distributor discharge voltage. It is the conventional practice to form the rotor output segment 24 out of a conductive material and a dielectric material to provide a rotor output tip surface 24a including the conductive and dielectric materials separately disposed from each other. For example, the rotor output segment 24 may be formed of a conductive segment of a conductive material such for example as stainless steel or brass and a dielectric segment placed on at least either of the upper and lower surfaces of the conductive segment. From the standpoints of high noise suppression effect, good design flexibility, high arc resistance, high heat resistance, etc., it is most preferable to form the dielectric segment out of silicone glass, that is, glass fiber impregnated or coated with silicone resin such as silicone varnish.

Returning to Fig. 1, the rotor output segment 24 is shown as formed of a conductive segment 26 placed on a dielectric segment 28. A rotor output segment formed of a conductive segment of a 0.6 mm thickness stainless steel plate and a dielectric segment of a 0.5 mm thickness silicone glass plate is tested for radio frequency interference radiation suppressing effect. The test results indicate that the distributor discharge voltage is 4 to 5 kilovolts and an about 15 decibel reduction appears in radio frequency interference radiation intensity as compared to a rotor output segment formed of only a 0.6 mm brass plate.

The engine spark plug 70 comprises a conductive external housing 72 formed with a threaded portion which is threadably engaged with an internally threaded opening (not shown) formed in the engine block of the associated engine so that a portion of the spark plug 70 extends within the cylinder of the engine. The components of the spark plug 70 within the cylinder include a center electrode 74 and a counter electrode 76 integral with the external housing threaded portion. The center electrode 74 is separated physically and electrically from the external housing 72 by an internal insulator 78. The internal insulator supports, at its upper section, an input terminal 82, which terminal is connected through the spark plug lead 60 to the distributor output terminal 38. A resistor 80 extends through the internal insulator 78 to electrically connect the input terminal 82 to the center electrode 74.

The resistor 80 is in the form of a monolithic resistor having a resistance per unit length of 3 kΩ to 15 kΩ having no effect on engine performance, and a length (l) of 8 mm or more and, more preferably, 12 mm to 15 mm. The whole length (L) of the spark plug 70 is normally 60 mm to 70 mm. The spark plug 70 having such a monolithic resistor 80 is effective to suppress radio frequency interference radiation. The reason for this radio frequency interference radiation suppressing effect is traceable to the fact that the monolithic resistor 80 and the electrostatic capacity between the monolithic resistor 80 and the external housing 72 constitute an RC filter to attenuate noise field components. An actual monolithic resistor includes an electrostatic capacity parallel to the resistance, the shunt electrostatic capacity increasing with decreasing monolithic resistor length. If the length of the monolithic resistor is less than 8 mm, the shunt electrostatic capacity becomes so great as to degrade the radio frequency interference radiation suppressing effect. A remarkable radio frequency interference radiation suppressing effect can be obtained with the monolithic resistor having a length of 12 mm to 15 mm.

The high-voltage-carrying lead 50 connected between the ignition coil 40 and the distributor input terminal 32 and the high-voltage-carrying leads 60 connected between the distributor output terminals 38 and the respective spark plug input terminals 82 are taken in the form of a high-voltage-carrying resistive cable which may be made by covering a carbon impregnated conductive wire 92 with an insulating sheath 94 and covering with a woven sleeve 96. The woven sleeve 96 is normally formed of an insulating material. The carbon impregnated conductive wire 92 has a resistance per unit length of 8 kΩ/m to 20 kΩ/m.

Fig. 3 contains curve Ao representing radio frequency interference radiation intensity versus frequency required by radio frequency interference radiation control standards, and a family of curves A1, A2, A3 and A4 each plotting radio frequency interference radiation intensity against frequency from test results obtained while actually running a bonnet type passenger car equipped with a 1500 cc engine associated with an ignition system wherein a different set of radio frequency interference radiation suppressing measures is taken. The radio frequency interference radiation suppressing measures include:

Measure (1) forming the rotor output segment 24 out of a dielectric segment 28 of a 0.5 mm thickness silicone glass plate and a conductive segment 26 of a 0.6 mm thickness brass plate placed on the dielectric segment 28;

Measure (2) connecting the spark plug center electrode 74 to the spark plug input terminal 82 through a monolithic resistor 80 having a resistance value of 5 kΩ and a length (l) of 12 mm; and

Measure (3) taking each of the high-voltage-carrying leads 50 and 60 in the form of a resistive-cord cable having a carbon impregnated wire conductor of 15 kΩ/m covered with an insulator sheath covered with an insulator woven sleeve.

Curve A1 relates to an ignition system wherein Measures (1) and (2) are taken but Measure (3) is not taken with the high-voltage-carrying leads 50 and 60 being taken in the form of normal non-resistive cables. Curve A2 relates to another ignition system wherein Measures (2) and (3) are taken but Measure (1) is not taken with the rotor output segment 24 being formed of a conductive segment 26 of a 0.6 mm thickness brass plate only. Curve A3 relates to still another ignition system wherein Measures (1) and (3) are taken but Measure (2) is not taken with the spark plug center electrode 74 being connected directly to the spark plug input terminal 82 employing no monolithic resistor 80. Curve A4 relates to another ignition system wherein Measures (1), (2) and (3) are taken. In Fig. 3, 1 μV/m is represented as zero decibels.

As can be seen by a study of Fig. 3, with each of the ignition systems wherein either of Measures (1), (2) and (3) is not taken, the radio frequency interference radiation intensity is higher at many frequency points than that required by the radio frequency interference radiation control standards, while with the ignition system wherein all of Measures (1), (2) and (3) are taken, the radio frequency interference radiation intensity is lower over the entire frequency range than that required by the radio frequency interference radiation control standards. From a more detailed inspection of curves Ao and A4, however, it can be seen that while the ignition system wherein all of Measures (1), (2) and (3) are taken meets the radio frequency interference radiation control standards, the difference between the radio frequency interference radiation intensity represented by curve A4 and that represented by curve Ao is relatively small in the frequency range from about 20 MHz to 100 MHz.

Fig. 4A contains curve Ao representing radio frequency interference radiation intensity versus frequency required by the radio frequency interference radiation control standards and curve B plotting radio frequency interference radiation intensity against frequency from test results obtained while actually running a cabover type truck equipped with a four-cycle, 2000 cc engine associated with an ignition system wherein all of Measures (1), (2) and (3) are taken. The test results indicate that the radio frequency interference radiation suppressing effect is low in the frequency range of about 20 KHz to about 100 KHz and the radio frequency interference radiation intensity is higher at low frequency points than that required by the radio frequency interference radiation control standards.

Fig. 4B contains curve Ao representing radio frequency interference radiation intensity versus frequency required by the radio frequency interference radiation control standards and curve C plotting radio frequency interference radiation intensity against frequency from test results obtained while actually running a two-box, bonnet type truck equipped with a four-cycle, 1500 cc engine associated with an ignition system wherein all of Measures (1), (2) and (3) are taken. The test results indicates that the radio frequency interference radiation suppressing effect is low in the frequency range of about 20 KHz to about 100 KHz and the radio frequency interference radiation intensity is higher at low frequency points than that required by the radio frequency interference radiation control standards.

The reason why the radio frequency interference radiation suppression effect becomes low in the frequency range of about 20 MHz to about 100 MHz as shown in Figs. 4A and 4B are not fully understood, but some general observations may be made in connection with automotive vehicle shape, engine height, and other factors. When spark discharge occurs in the distributor 10 between the rotor output segment 24 and an output terminal 38, current flows through the high-voltage-carrying cable 50 connected between the distributor center input terminal 32 and the ignition coil 40 and also through the high-voltage-carrying cable 60 connected between the distributor output terminal 38 and the engine spark plug 70. As a result, each of the high-voltage-carrying cables 50 and 60 serves as an antenna from which a noise field is radiated into space. The high-voltage-carrying cable 60 has a length of 60 cm or more and has its one end connected to the spark plug center electrode 74 through the monolithic resistor 70 and hence to the ground through an air gap between the spark plug center and counter electrodes 74 and 76. This attenuates the current through the cable 60 and shortens the effective antenna length of the cable 60, reducing the intensity of the noise field radiated from the cable 60 to a considerable extent. On the other hand, since the high-voltage-carrying cable 50 has a length as short as 30 cm and has its one end connected to the ignition coil secondary winding and hence to the ignition coil primary winding lead, the extent to which the current through the cable 50 is attenuated is too small to prevent radiation of a high intensity of noise field from the cable 50 particularly in the frequency range of about 20 MHz to 100 MHz.

Accordingly, the need has been recognized for a new measure which can suppress the intensity of noise field to a sufficient extent particularly in the frequency range of about 20 MHz to about 100 MHz to compensate for the aforementioned drawbacks inherent in ignition systems wherein Measures (1), (2) and (3) are taken.

Each of the high-voltage-carrying cables 50 and 60 is taken in the form of a resistive-cord cable including a carbon impregnated conductive wire 92 covered with an insulating sheath 94 covered with a woven sleeve 96. Normally, the carbon impregnated conductive wire has a resistance value per unit length of 8 kΩ/m to 20 kΩ/m. The carbon impregnated conductive wire and the distributed electrostatic capacity between the carbon impregnated conductive wire and the engine ground constitute an RC low pass filter which is effective to attenuate the current flow through the carbon impregnated conductive wire, thereby effecting the suppression of radio frequency interference radiation.

Fig. 5 contains curves D1, D2 and D3 each relating the radio frequency interference radiation suppression effect in decibels to the resistive-cord cable resistance in kilo-ohms for a different resistive-cord cable length. The term "resistive-cord cable resistance" as used throughout this invention is intended to mean "the resistance value of the carbon impregnated conductive wire itself." It will also be appreciated that the term "resistive-cord cable length" is intended to mean "the length of the carbon impregnated conductive wire between its one tip end and the other tip end thereof." Curve D1 relates to a 1m resistive-cord cable 50, curve D2 relates to a 70 cm resistive-cord cable 50, and curve D3 relates to a 35 cm resistive-cord cable 50. From an inspection of the graph of Fig. 5, it can be seen that the resistive-cord cable 50 is required to have a resistance value of 12 kΩ or more to suppress the radio frequency interference radiation to a sufficient extent and that it is preferable for the resistive-cord cable 50 to have a length of 70 cm or more.

The characteristics of the RC low pass filter composed of the carbon impregnated conductive wire and the distributed electrostatic capacity is dependent upon the resistance and length of the resistive-cord cable 50. With the resistive-cord cable 50 having a resistance of 12 kΩ or more, the RC low pass filter has its cut-off frequency lowered to increase the ability to cut off the transmission of frequencies ranging from about 20 MHz to 100 MHz. If the resistance of the resistive-cord cable 50 exceeds about 25 kΩ, however, substantially no increase occurs in the ability to suppress radio frequency interference radiation and an excessive loss occurs in spark pulse energy to spoil engine performance. With the resistive-cord cable 50 having a length of 70 cm or more, the distributed electrostatic capacity increases to increase the ability to cut off the transmission of frequencies ranging from about 20 MHz to 100 MHz for the same resistive-cord cable resistance. If the length of the resistive-cord cable 50 exceeds about 120 cm, however, substantially no increase occurs in the ability to suppress radio frequency interference radiation and problems occur in wiring the resistive-cord cable 50.

Fig. 6A contains curve Ao representing radio frequency interference radiation intensity versus frequency required by the radio frequency interference radiation control standards, and curves B and E each plotting radio frequency interference radiation intensity against frequency from test results obtained while actually running a cabover type truck equipped with a four-cycle, 2000 cc engine associated with an ignition system. Curve B relates to an ignition system wherein all of Measures (1), (2) and (3) are taken with the resistive-cord cable 50 having a resistance of 5 kΩ and a length of 34 cm. Curve E relates to an ignition system made in accordance with the teachings of the present invention wherein all of Measures (1), (2) and (3) are taken with the resistive-cord cable 50 having a resistance of 15 kΩ and a length of 100 cm. It is apparent from the test results that the ignition system of the present invention can suppress radio frequency interference radiation in the frequency range of about 20 MHz to about 100 MHz to an extent sufficient to meet the radio frequency interference radiation control standards.

Fig. 6B contains curve Ao representing radio frequency interference radiation intensity versus frequency required by the radio frequency interference radiation control standards, the curves C and F each plotting radio frequency interference radiation intensity against frequency from test results obtained while actually running a two-box, bonnet type truck equipped with a four-cycle, 1500 cc engine associated with an ignition system. Curve C relates to an ignition system wherein all of Measures (1), (2) and (3) are taken with the resistive-cord cable 50 having a resistance of 5 kΩ and a length of 34 cm. Curve F relates to an ignition system made in accordance with the teachings of the present invention wherein all of Measures (1), (2) and (3) are taken with the resistive-cord cable 50 having a resistance of 15 kΩ and a length of 100 cm. It is apparent from the test results that the ignition system of the present invention can suppress radio frequency interference radiation in the frequency range of about 20 MHz to about 100 MHz to an extent sufficient to meet the radio frequency interference radiation control standards.

Various tests indicate that such radio frequency interference radiation suppressing effects as shown in Figs. 6A and 6B are obtained when the measure forming the high-voltage-carrying cable 50 out of a resistive-cord cable having a resistance of 12 kΩ or more and/or a length of 70 cm or more is taken along with all of the Measures (1), (2) and (3) is not taken even though the high-voltage-carrying cable 50 is composed of a resistive-cord cable having a resistance of 12 kΩ or more and a length of 70 cm or more.

There has been provided, in accordance with the present invention, an engine ignition system including an ignition coil, a distributor, and spark plugs for which several measures are taken to suppress radio frequency interference radiation therefrom. The distributor has a rotor output segment with its output tip surface formed of conductive and dielectric materials separately disposed from each other. Each of the spark plugs includes a monolithic resistor connected between its input terminal and its center electrode. The spark plugs are connected to the distributor through respective high-voltage-carrying cables each including a carbon impregnated conductive wire covered with an insulating sheath. The ignition coil is connected to the distributor through a high-voltage-carrying cable which includes a carbon impregnated conductive wire having a resistance of 12 kΩ or more to suppress radio frequency interference radiation in the range of about 20 MHz to about 100 MHz. As a result, the ignition system of the present invention can suppress radio frequency interference radiation to an extent sufficient to fully meet the radio frequency interference radiation control standards over the entire frequency range.

## Claims

1. An ignition system for use with a motor vehicle internal combustion engine, comprising:

a distributor (10) including a rotor segment (24) supported on a rotor (20) adapted to be rotated about its axis within a distributor cap (30) having an input terminal (32) electrically connected to said rotor segment (24) and a plurality of output terminals (38) circumferentially disposed about the rotor axis of rotation, said rotor segment (24) having an output tip surface (24a) formed of conductive and dielectric materials (26, 28) separately disposed from each other;

a plurality of spark plugs (70) each having an input terminal (82), a center electrode (74) and a monolithic resistor (80) electrically connected between said spark plug input terminal (82) and said spark plug center electrode (74);

a plurality of first cables (60) electrically connecting said distributor output terminals (38) to said spark plug input terminals (82), respectively; and

a second cable (50) electrically connecting an ignition coil (40) to said distributor input terminal (32);

characterized in that each of said first cables (60) includes a carbon impregnated conductive wire (92) covered with an insulating sheath (94), and that said second cable (50) includes a high-voltage-carrying resistive wire (92) covered with an insulating sheath (94), said second cable high-voltage-carrying resistive wire (92) having a resistance in the range of 12 kΩ to 25 kΩ.

2. Ignition system as claimed in claim 1, characterized in that said second cable high-voltage-carrying resistive wire (92) has a length of 70 cm or more.

3. Ignition system as claimed in claim 2, characterized in that said second cable high-voltage-carrying resistive wire (92) has a length in the range from 70 cm to 120 cm.

4. Ignition system as claimed in any of the claims 1 to 3, characterized in that said second cable high-voltage-carrying resistive wire (92) is in the form of a carbon impregnated conductive wire.

## Patentansprüche

1. Zündsystem für ein Fahrzeug mit Verbrennungsmotor, mit:

einem Verteiler (10) mit einem Rotorsegment (24), das gehalten ist an einem Rotor (20), der um seine Achse drehbar ist in einer Verteilerkammer (30) mit einer elektrisch mit dem Rotorsegment (24) verbundenen Eingangsklemme (32) und mehreren in Umfangsrichtung um die Drehachse des Rotors angeordneten Ausgangsklemmen (38), wobei das Rotorsegment (24) an seinem Ende eine Ausgangs-Oberfläche (24a) aus getrennt voneinander angeordneten leitfähigen und dielektrischen Materialien (26, 28) aufweist,

mehreren Zündkerzen (70) mit je einer Eingangsklemme (82), einer Mittelelektrode (74) und einem elektrisch zwischen die Eingangsklemme (82) und die Mittelelektrode (74) der Zündkerze geschalteten monlithischen Widerstand (80),

mehreren ersten Kabeln (60), die die Ausgangsklemmen (38) des Verteilers mit den Eingangsklemmen (82) der Zündkerzen verbinden, und

einem zweiten Kabel (50), das eine Zündspule (40) mit der Eingangsklemme (32) des Verteilers verbindet,

dadurch gekennzeichnet, daß jedes der ersten Kabel (60) einen mit einer isolierenden Umhüllung (94) versehenen kohlenstoffimprägnierten Leitungsdraht (92) aufweist und daß das zweite Kabel (50) einen mit einer isolierenden Umhüllung (94) versehenen Hochspannungs-Widerstandsdraht (92) aufweist, dessen Widerstand im Bereich von 12 kΩ bis 25 kΩ liegt.

2. Zündsystem nach Anspruch 1, dadurch gekennzeichnet, daß der Hochspannungs-Widerstandsdraht (92) des zweiten Kabels eine Länge von 70 cm oder mehr aufweist.

3. Zündsystem nach Anspruch 2, dadurch gekennzeichnet, daß der Hochspannungs-Widerstandsdraht (92) des zweiten Kabels eine Länge im Bereich von 70 cm bis 120 cm aufweist.

4. Zündsystem nach einem der Ansprüche 1 bis 3, dadurch gekennzeichnet, daß der Hochspannungs-Widerstandsdraht (92) des zweiten Kabels als kohlenstoffimprägnierter Leitungsdraht ausgebildet ist.

## Revendications

1. Système d'allumage utilisable avec un moteur à combustion interne de véhicule à moteur, comprenant:

un distributeur (10) comprenant un segment de rotor (24) supporté sur un rotor (20) conçu pour tourner autour de son axe à l'intérieur d'une tête de distributeur (30) ayant une borne d'entrée (32) reliée électriquement audit segment de rotor (24) et une pluralité de bornes de sortie (38) disposées suivant une circonférence autour de l'axe de rotation du rotor, ledit segment de rotor (24) ayant une surface extrême externe (24a) formée de matériaux (26, 28) conducteurs et diélectriques disposés séparément les uns des autres;

une pluralité de bougies d'allumage (70) ayant chacune une borne d'entrée (82), une électrode centrale (74) et une résistance monolithique (80) branchée électriquement entre ladite borne d'entrée (82) de la bougie d'allumage et ladite électrode centrale (74) de la bougie d'allumage;

une pluralité de premiers câbles (60) reliant électriquement lesdites bornes de sortie (38) du distributeur auxdites bornes d'entrée (82) des bougies d'allumage, respectivement; et

un second câble (50) reliant électriquement une bobine d'allumage (40) à ladite borne d'entrée (32) du distributeur;

caractérisé en ce que chacun desdites premiers câbles (60) comprend un fil conducteur (92) imprégné de carbone recouvert d'une gaine isolante (94), et en ce que ledit second câble (50) comprend un fil résistant (92) portant une tension élevée recouvert d'une gaine isolante (94), ledit fil résistant (92) portant une tension élevée du second câble ayant une résistance dans le domaine de 12 kΩ à 25 kΩ.

2. Système d'allumage selon la revendication 1, caractérisé en ce que ledit fil résistant (92) portant une tension élevée du second câble a une longueur de 70 cm ou plus.

3. Système d'allumage selon la revendication 2, caractérisé en ce que ledit fil résistant (92) portant une tension élevée du second câble a une longueur dans le domaine de 70 cm à 120 cm.

4. Système d'allumage selon l'une quelconque des revendications 1 à 3, caractérisé en ce que ledit fil résistant (92) portant une tension élevée du second câble est sous la forme d'un fil conducteur imprégné de carbone.

FIG.1

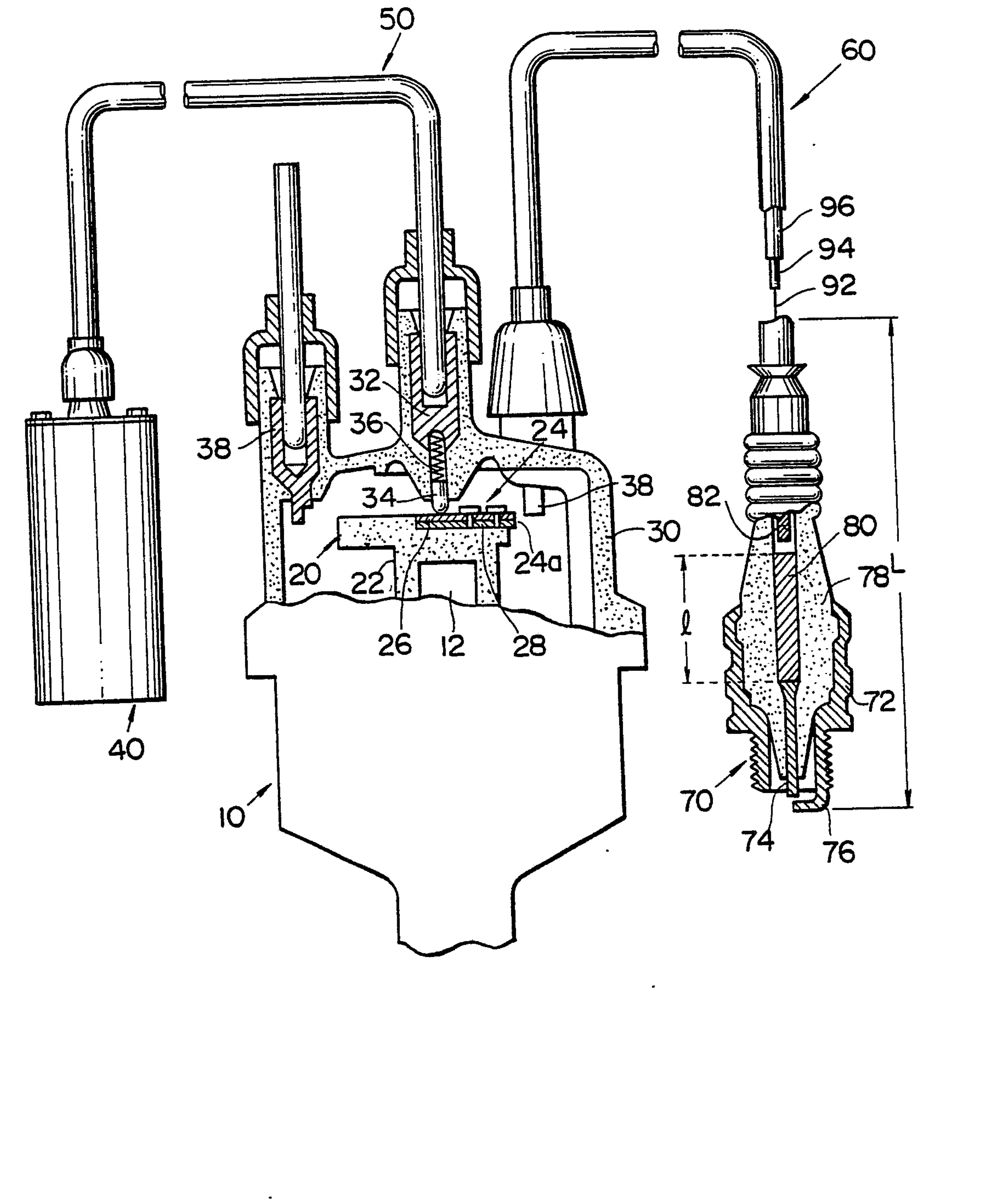
50
60
96
94
92
32
36
24
38
38
34
82
80
20
30
24a
78
L
22
l
26
12
28
72
40
70
10
74
76

FIG.2

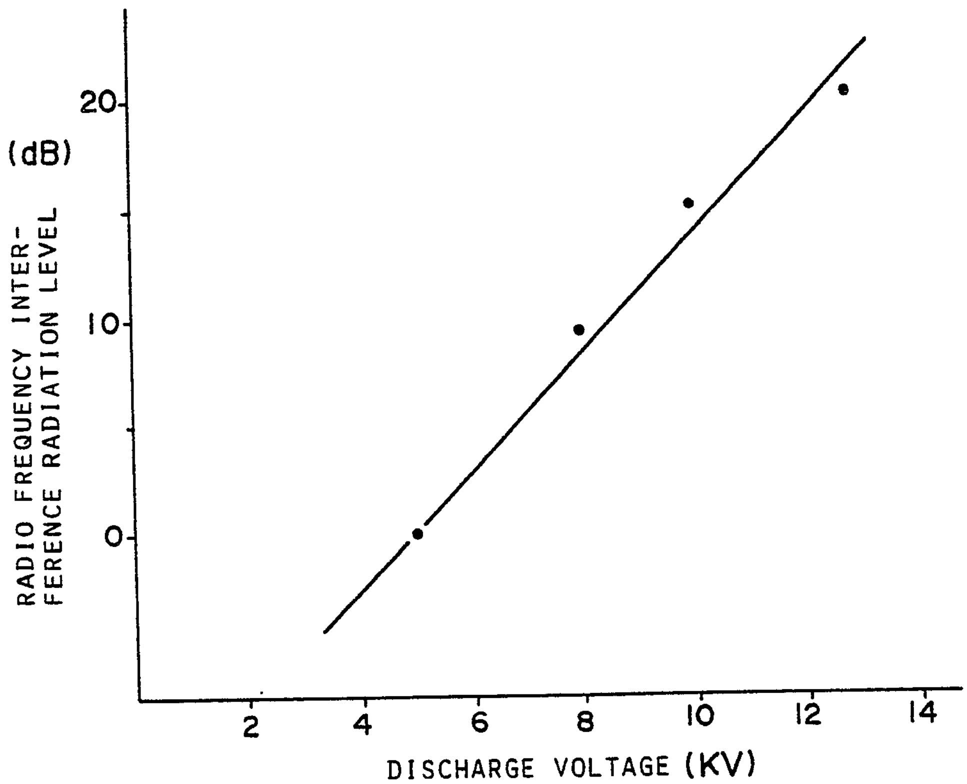
20
(dB)
10
0
RADIO FREQUENCY INTER-
FERENCE RADIATION LEVEL
2
4
6
8
10
12
14
DISCHARGE VOLTAGE (KV)

FIG.3

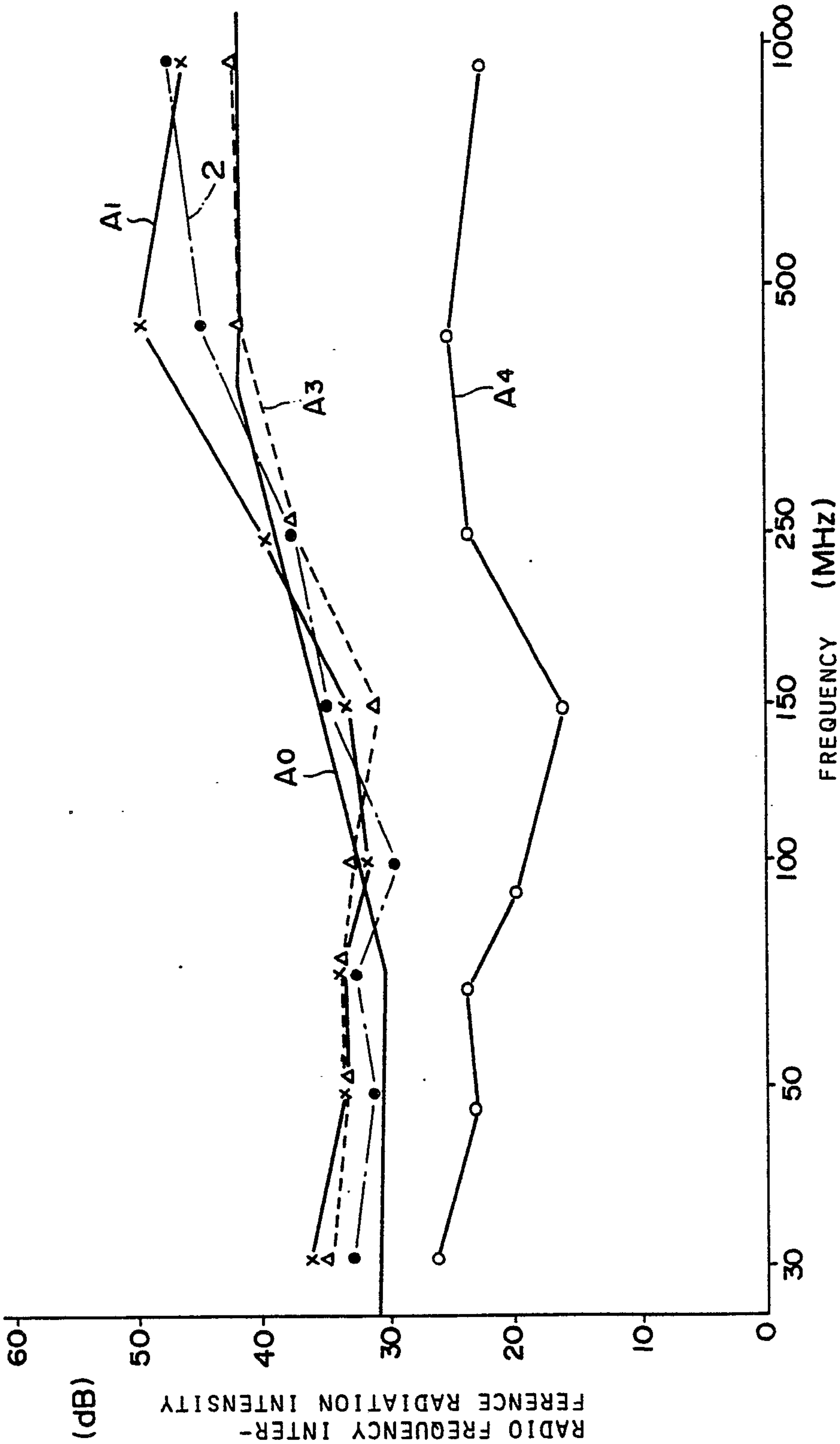
A1
2
A3
A0
A4
RADIO FREQUENCY INTER-FERENCE RADIATION INTENSITY
(dB)
0
10
20
30
40
50
60
30
50
100
150
250
500
1000
FREQUENCY (MHz)

FIG.4A

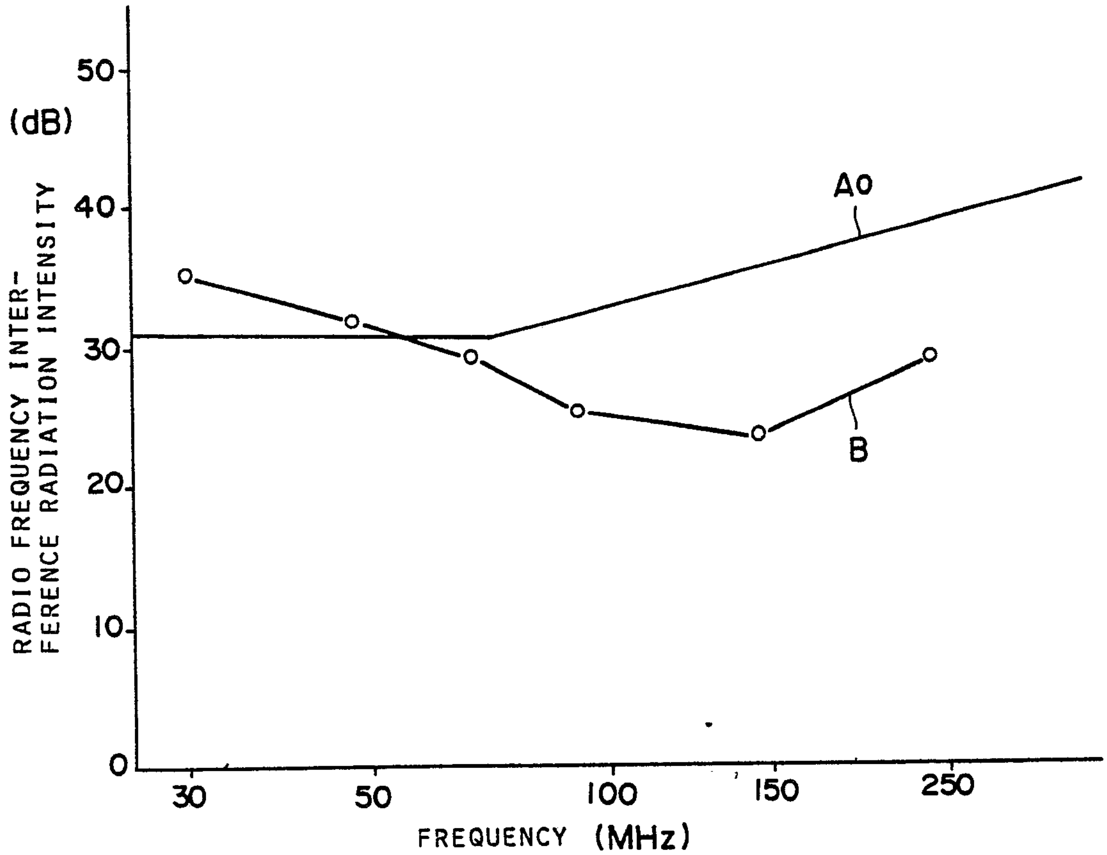
50
(dB)
40
30
20
10
0
RADIO FREQUENCY INTER-
FERENCE RADIATION INTENSITY
Ao
B
30
50
100
150
250
FREQUENCY (MHz)

FIG.4B

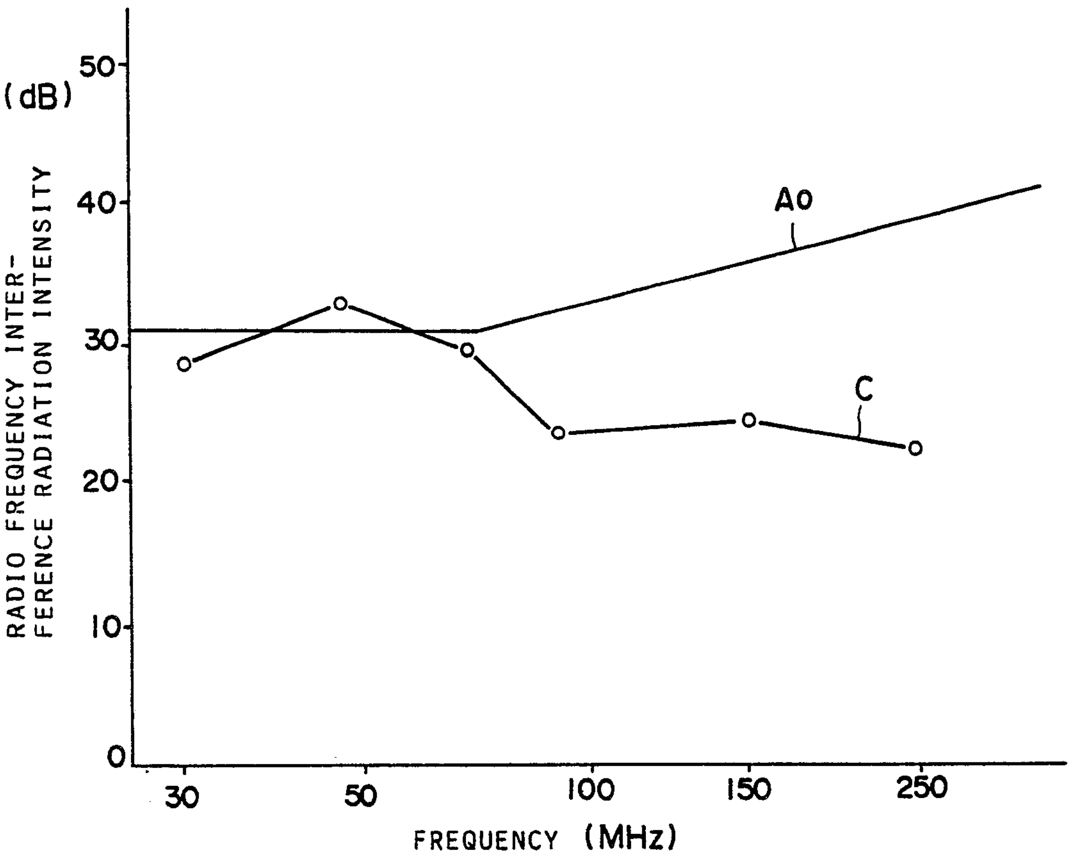
(dB)
50
40
30
20
10
0
RADIO FREQUENCY INTER-
FERENCE RADIATION INTENSITY
Ao
C
30
50
100
150
250
FREQUENCY (MHz)

FIG.5

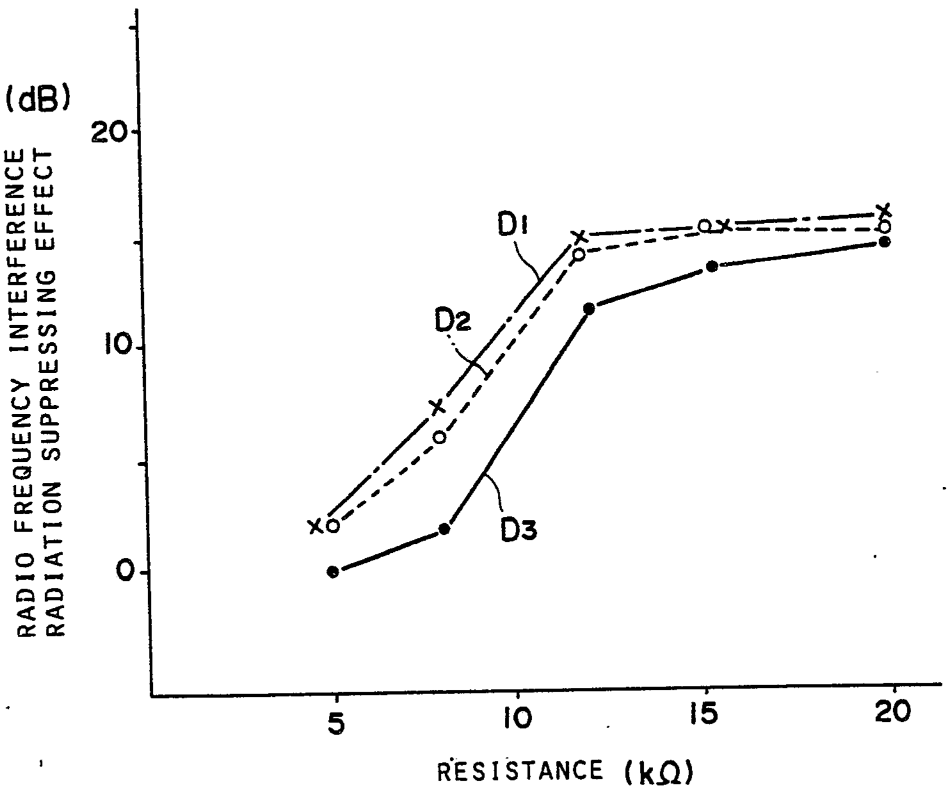
(dB)
20
10
0
RADIO FREQUENCY INTERFERENCE RADIATION SUPPRESSING EFFECT
D1
D2
D3
5
10
15
20
RESISTANCE (kΩ)

FIG.6A

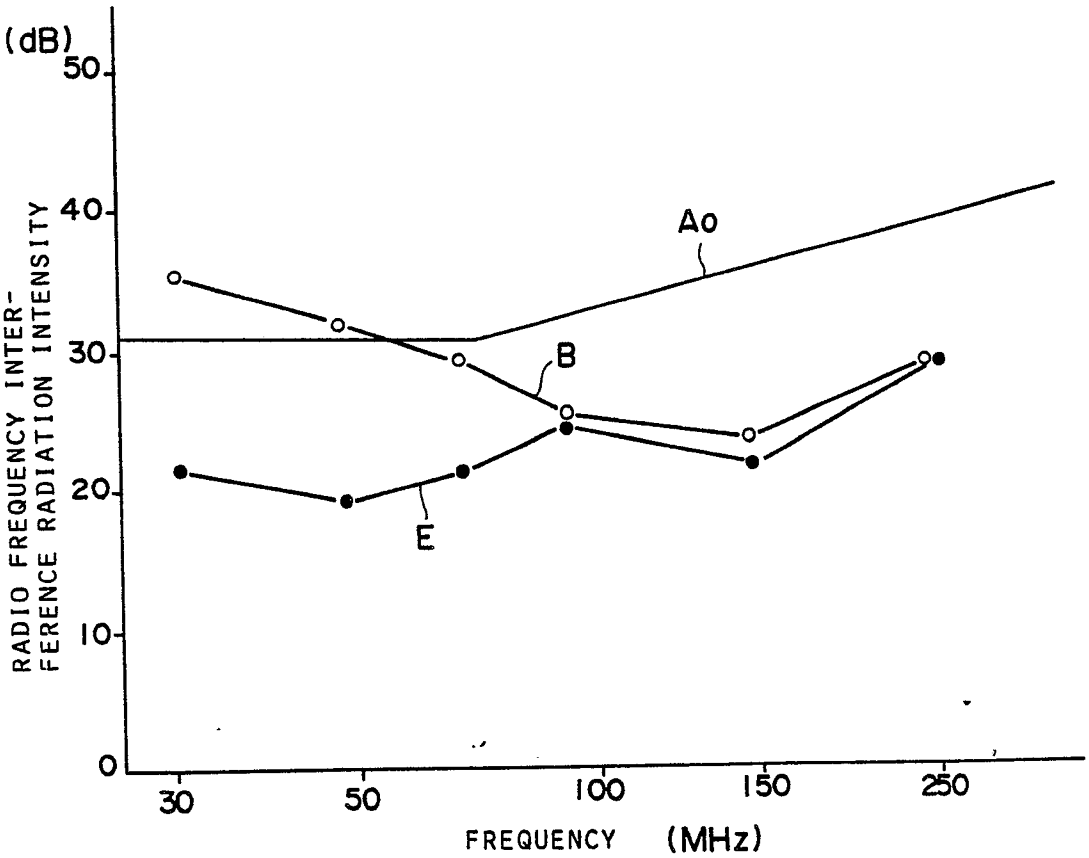
(dB)
50
40
30
20
10
0
RADIO FREQUENCY INTER-
FERENCE RADIATION INTENSITY
Ao
B
E
30
50
100
150
250
FREQUENCY (MHz)

FIG.6B

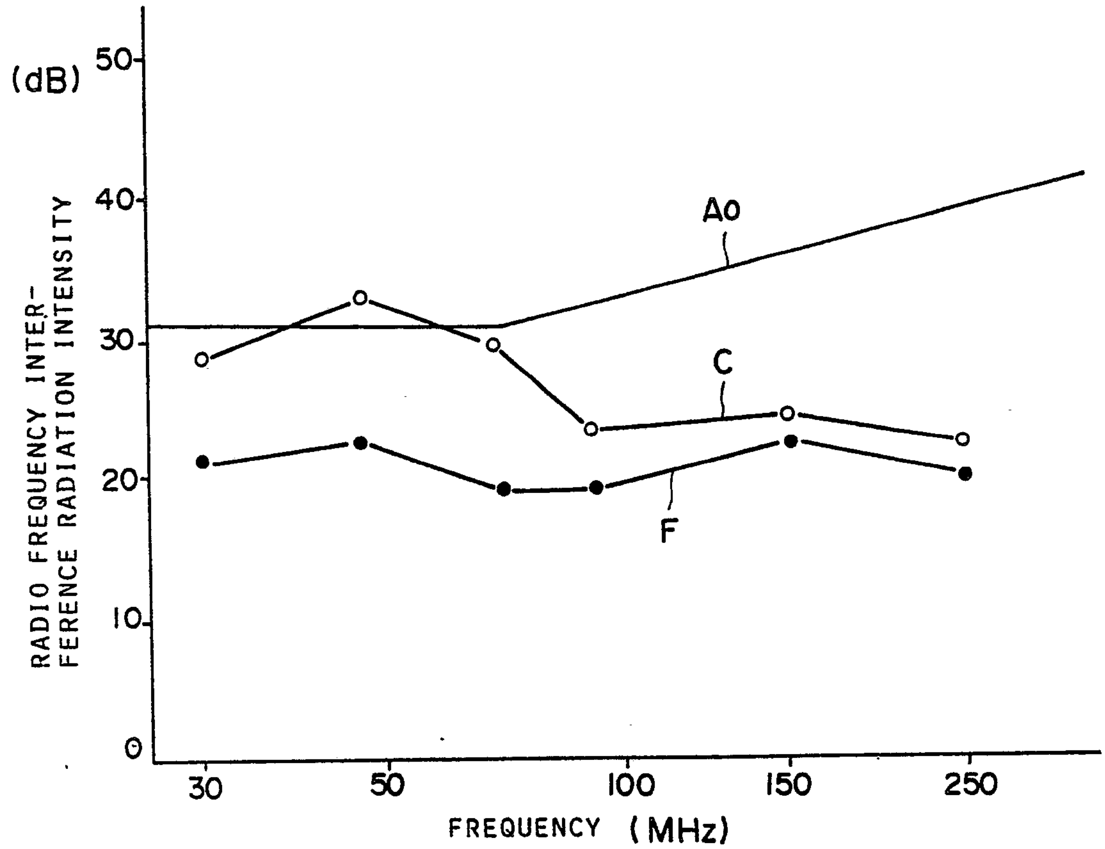
(dB)
50
40
30
20
10
0
RADIO FREQUENCY INTER-
FERENCE RADIATION INTENSITY
Ao
C
F
30
50
100
150
250
FREQUENCY (MHz)